# EUROPÄISCHE PATENTSCHRIFT

(11) **EP 3 378 112 B1**
(45) Veröffentlichungstag und Bekanntmachung des Hinweises auf die Patenterteilung: **15.04.2020**
(21) Anmeldenummer: 16801407.4
(22) Anmeldetag: 17.11.2016
(51) Int. Cl.: H01M 2/20, H01M 2/34, H02H 9/04, H02J 7/00, H01G 11/18, H01G 11/74, H01G 11/16

(54) **ELEKTRISCHE ÜBERBRÜCKUNGSEINRICHTUNG ZUM ÜBERBRÜCKEN ELEKTRISCHER BAUELEMENTE, INSBESONDERE EINER ENERGIEQUELLE ODER EINES ENERGIEVERBRAUCHERS**
ELECTRICAL BRIDGING DEVICE FOR BRIDGING ELECTRICAL COMPONENTS, IN PARTICULAR AN ENERGY SOURCE OR AN ENERGY CONSUMER
DISPOSITIF DE PONTAGE ÉLECTRIQUE POUR PONTER DES COMPOSANTS ÉLECTRIQUES, NOTAMMENT UNE SOURCE D'ÉNERGIE OU UN CONSOMMATEUR D'ÉNERGIE

(30) Priorität: 20.11.2015 DE 102015222939
(43) Veröffentlichungstag der Anmeldung: 26.09.2018
(73) Patentinhaber: Fraunhofer Gesellschaft zur Förderung der angewandten Forschung E.V., 80686 München (DE)
(72) Erfinder: WALLER, Reinhold, 91077 Neunkirchen/Br. (DE); LORENTZ, Vincent, 91056 Erlangen (DE); MÄRZ, Martin, 90491 Nürnberg (DE)
(74) Vertreter: Gagel, Roland
(86) Internationale Anmeldenummer: PCT/EP2016/077930
(87) Internationale Veröffentlichungsnummer: WO 2017/085157

(56) Entgegenhaltungen:
- EP-A1- 2 851 972
- EP-A2- 2 642 582
- US-A1- 2003 164 106

## Beschreibung

### Technisches Anwendungsgebiet

Die vorliegende Erfindung betrifft eine elektrische Überbrückungseinrichtung aus wenigstens zwei voneinander elektrisch isolierten elektrischen Leitern, die durch Auslösen einer exothermen Reaktion in einer an den Leitern angeordneten reaktiven Schicht elektrisch miteinander verbindbar sind.

Eine derartige elektrische Überbrückungseinrichtung dient insbesondere dem Überbrücken einer Energiequelle oder eines Energieverbrauchers. Solche Energiequellen oder Energieverbraucher finden sich in einer Vielzahl von Geräten, bspw. in elektrischen Fahrzeugen oder stationären Energiespeichern. Die elektrische Energie kann dabei in chemischer Form wie im Falle von Batteriezellen oder auch in physikalischer Form z.B. in Kondensatorzellen gespeichert werden. Zur Erzeugung ausreichender Spannungen und hoher Ströme von 100 bis 1000 A, wie sie bspw. für Kraftfahrzeuge mit elektrischen Antrieben erforderlich sind, werden mehrere dieser Zellen, bspw. zwischen 4 und mehr als 100 Zellen, in Serie zu einem Stapel von Zellen verbunden. Eine Herausforderung der in Serie bzw. in Reihe parallel verschalteten Zellen stellt die Zuverlässigkeit des gesamten Stapels und die Umorganisation des Stapels im Fall eines Zellenfehlers dar. Ohne weitere Maßnahmen fällt bei Ausfall einer Zelle in einem Stapel das gesamte System aus, obwohl der Stapel selbst immer noch eine ausreichende Anzahl von intakten Zellen umfasst. Bei Nutzung eines derartigen Systems in einem Elektrofahrzeug kann ein Zellenfehler daher zu einem Systemausfall führen. Weiterhin kann eine degradierte Batteriezelle auch einen erhöhten Innenwiderstand aufweisen, der dann zu einer unzulässigen Erwärmung der Zelle führt. Grundsätzlich ist es daher wünschenswert, defekte Zellen während des Betriebs des Energiespeichers elektrisch überbrücken zu können, um derartige Probleme zu vermeiden.

Ein ähnliches Problem besteht auch bei in Reihe geschalteten Verbrauchern, bspw. bei Beleuchtungssystemen, die eine Mehrzahl von in Serie verbundenen Leuchtelementen aufweisen. Fällt einer der Verbraucher aus, so kann dies zum Ausfall des gesamten Systems führen.

### Stand der Technik

Zur Lösung der obigen Problematik sind sog. inverse Sicherungen (Antifuse) bekannt, die die entsprechende Zelle bzw. den entsprechenden Verbraucher bei einem Ausfall elektrisch überbrücken. Diese inversen Sicherungen werden vor allem bei Systemen niedriger Leistung eingesetzt, bspw. in integrierten Schaltungen und Beleuchtungssystemen. Bekannt sind bspw. Sicherungen, die eine dünne Barriere aus einem nicht-leitenden amorphen Silizium zwischen zwei Metallkontakten aufweisen. Wird eine ausreichend hohe Spannung über die beiden Anschlüsse an das amorphe Silizium angelegt, so geht dieses in eine leitfähige, polykristalline Silizium-Metall-Legierung mit niedrigem Widerstand über. Bei Beleuchtungssystemen wird mit einer derartigen inversen Sicherung vermieden, dass die gesamte Serienschaltung beim Ausfall einer einzelnen Leuchte ausfällt. Die Leuchten sind hierbei mit dieser Sicherung versehen. Bei einem Ausfall der Leuchte liegt die gesamte Netzspannung über die einzelne, ausgefallene Leuchte an. Damit wird die Sicherung wirksam und die ausgefalle Leuchte elektrisch überbrückt, so dass die Serienschaltung ihre Funktion weiter ausführen kann.

Weiterhin ist es bspw. im Bereich der Photovoltaik bekannt, Energiequellen bzw. Energieverbraucher durch Bypass-Dioden zu überbrücken. Die Bypass-Dioden dienen dazu, kurzfristige Unterbrechungen der Energieerzeugung durch eine Zelle zu handhaben, bspw. im Falle einer Abschattung einer Solargeneratorzelle. Bypass-Dioden stellen jedoch nur eine unidirektionale Verbindung her, so dass ein Energiespeicher mit Bypass-Dioden nur im Fall der Energieabgabe zuverlässig funktionieren würde. Ein Wiederaufladen der verbleibenden intakten Zellen wäre jedoch nicht möglich, da in der umgekehrten Richtung die Diode sperren würde. Daher stellen Bypass-Dioden, wie sie aus dem Bereich der Photovoltaik bekannt sind, für die eingangs genannten Anwendungen keine sinnvolle Maßnahme zur Überbrückung dar.

Aus der DE 37 21 754 A1 ist eine Überbrückungseinrichtung zur Sicherung von Batteriezellen bekannt, die eine irreversible Überbrückung von hochohmig ausfallenden, zerstörten Speicherzellen ermöglicht. Die Überbrückungseinrichtung besteht aus zwei schichtweise in Serie angeordneten Halbleiterbauelementen mit jeweils unterschiedlicher Strom/Spannungs-Charakteristik. Bei hochohmigem Ausfall einer zerstörten Speicherzelle fließt der hohe Ladestrom durch die beiden Halbleiterbauelemente, die aufgrund der daraus resultierenden starken Temperaturerhöhung durchlegieren und die Speicherzelle dadurch irreversibel niederohmig kurzschließen. Eine derartige passive Überbrückungseinrichtung wird allerdings nur ausgelöst, wenn die Akkumulatorzelle bereits stark degradiert ist. Ein vorzeitiges Auslösen, etwa zur Verhinderung hoher Verlustleistungen, ist nicht möglich.

Die bisher beschriebenen inversen Sicherungen sind für einen Einsatz in den eingangs genannten Anwendungen, bspw. bei Batterien zum Bereitstellen der Leistung für einen elektrischen Antrieb, nicht geeignet. Dies liegt vor allem an dem hohen Widerstand dieser Sicherungen im ausgelösten Zustand, der zu Verlustleistungen im Bereich von bis zu 50 W und damit zu einer unzulässigen Erwärmung der Sicherungen führt, an der geringen Stromtragfähigkeit dieser Sicherungen und auch an deren hohen Kosten.

Aus der DE 10 2012 005 979 A1 und aus der zur selben Patentfamilie gehörenden EP 2 642 582 A2 ist ein elektrisches Überbrückungselement für die Überbrückung von defekten Speicherzellen in Energiespeichern beschrieben, das sich prinzipiell auch für Batterien hoher elektrischer Leistung eignet. Bei diesem Überbrückungselement ist zwischen zwei elektrischen Leitern eine Schichtfolge mit wenigstens einer elektrischen Isolationsschicht und einem oder mehreren reaktiven Schichtstapeln ausgebildet, in denen sich eine exotherme Reaktion auslösen lässt. Die reaktiven Schichtstapel und die Isolationsschicht sind so aufeinander abgestimmt, dass sich die Isolationsschicht durch die bei der exothermen Reaktion abgegebene Wärmeenergie auflöst und eine elektrische Verbindung zwischen den elektrischen Leitern hergestellt wird. Rückstände aus dem Isolationsmaterial können dabei bei diesem Überbrückungselement jedoch Probleme bereiten.

Die Aufgabe der vorliegenden Erfindung besteht darin, eine elektrische Überbrückungseinrichtung zur Überbrückung elektrischer Bauelemente anzugeben, die im ausgelösten Zustand hohe Ströme bei gleichzeitig niedrigem Serienwiderstand tragen kann, eine dauerhafte irreversible Überbrückung der überwachten Bauelemente ermöglicht und sich kostengünstig herstellen lässt.

### Darstellung der Erfindung

Die Aufgabe wird mit der elektrischen Überbrückungseinrichtung gemäß Patentanspruch 1 gelöst. Vorteilhafte Ausgestaltungen der Überbrückungseinrichtung sind Gegenstand der abhängigen Patentansprüche oder lassen sich der nachfolgenden Beschreibung sowie dem Ausführungsbeispiel entnehmen.

Die vorgeschlagene elektrische Überbrückungseinrichtung weist wenigstens zwei voneinander elektrisch isolierte elektrische Leiter auf, die beim Einsatz beispielsweise an die beiden Pole einer zu überbrückenden Energiequelle oder eines zu überbrückenden Energieverbrauchers angeschlossen werden. Die beiden elektrischen Leiter sind so angeordnet, dass wenigstens ein erster in eine Raumrichtung orientierter Oberflächenbereich des ersten Leiters über einen Spalt von wenigstens einem zweiten in die gleiche Raumrichtung orientierten Oberflächenbereich des zweiten Leiters beabstandet ist.
Unter der Orientierung eines Oberflächenbereiches in eine Raumrichtung ist dabei zu verstehen, dass der Oberflächenbereich aus dieser Raumrichtung als Flächenbereich zu erkennen ist. Hiermit soll vor allem klargestellt werden, dass die beiden Oberflächenbereiche weder gegeneinander gerichtet sind noch unter einem senkrechten Winkel zueinander stehen. Der erste und der zweite Oberflächenbereich sind aus dieser Raumrichtung jeweils als Flächenbereich erkennbar. Der erste und der zweite Oberflächenbereich sind dabei jeweils mit einer Schicht aus einem elektrisch leitfähigen Material bedeckt, das einen niedrigeren Schmelzpunkt als das Material der elektrischen Leiter aufweist. Vorzugsweise handelt es sich dabei um ein metallisches Lotmaterial. Prinzipiell sind aber auch andere Materialien möglich, beispielsweise elektrisch leitfähige Polymermaterialien.

Bei der vorgeschlagenen Überbrückungseinrichtung sind die Spaltbreite und die elektrisch leitfähigen Schichten so gewählt, dass der Spalt durch Aufschmelzen der beiden Schichten überbrückt wird. Über den beiden Schichten aus dem elektrisch leitfähigen Material ist eine Schicht aus einem reaktiven Material angeordnet, in der vorliegenden Patentanmeldung auch als reaktive Schicht bezeichnet, in der sich eine exotherme Reaktion auslösen lässt. Unter dem Begriff Schicht ist hierbei auch eine zusammenhängende Schichtfolge aus unterschiedlichen Schichtmaterialien bzw. ein Schichtstapel zu verstehen. Die reaktive Schicht ist so dimensioniert und angeordnet, dass die beiden Schichten aus dem elektrisch leitfähigen Material durch die bei der exothermen Reaktion der reaktiven Schicht abgegebene Wärmeenergie an dem Spalt verschmelzen und dadurch eine elektrische Verbindung zwischen den elektrischen Leitern hergestellt wird.

Für die elektrische Überbrückung muss daher lediglich die exotherme Reaktion in der reaktiven Schicht geeignet ausgelöst werden. Dies kann - je nach Art des reaktiven Materials - bspw. durch Stromfluss, Erwärmung, Funkeneinwirkung, Laserbestrahlung oder einen Initialzünder erfolgen. Ein Beispiel für eine reaktive Schicht ist eine reaktive Nanofolie, bspw. eine reaktive Ni/Al-Folie, wie sie bspw. aus der WO 01/83182 A1 bekannt ist. Derartige Nanofolien setzen sich aus einer großen Anzahl von Nanoschichten zusammen, bspw. mit Schichtdicken im Bereich von 1 nm bis 500 nm, wobei sich in der Regel Schichten aus zwei unterschiedlichen Materialien abwechseln, die durch geeigneten Energieeintrag exotherm miteinander reagieren. Auch andere reaktive Schichten sind in der vorgeschlagenen Überbrückungseinrichtung einsetzbar, bspw. Schichten aus Nanothermit oder anderen exotherm reagierenden Materialien. Die reaktive Schicht muss dabei so über den beiden Oberflächenbereichen angeordnet sein, dass sie in nicht ausgelöstem Zustand keinen elektrischen Kontakt zwischen den beiden Oberflächenbereichen herstellt. Im Falle einer elektrisch leitfähigen reaktiven Schicht muss diese daher einen Abstand zu wenigstens einem der Oberflächenbereiche aufweisen, oder durch einen geeigneten Abstandshalter von diesem oder beiden Oberflächenbereichen elektrisch isoliert sein.

In einer bevorzugten Ausgestaltung liegt die reaktive Schicht dabei auf einem der beiden Oberflächenbereiche auf, wobei der andere Oberflächenbereich entsprechend in der Höhe versetzt ist, um einen elektrisch isolierenden Abstand zur reaktiven Schicht aufrechtzuerhalten. Im Falle des Einsatzes einer Nanofolie als reaktiver Schicht sind hierzu keine weiteren Maßnahmen erforderlich, da diese ausreichend steif und damit selbsttragend ist. Die reaktive Schicht kann natürlich auch an einem Trägerelement befestigt sein, durch das dann der Abstand zu wenigstens einer der mit der elektrisch leitfähigen Schicht bedeckten Oberflächenbereiche aufrechterhalten wird. Der Höhenversatz der beiden Oberflächenbereiche kann entweder durch unterschiedliche Höhen oder Dicken der beiden elektrischen Leiter oder auch durch unterschiedliche Dicken der beiden Schichten aus dem elektrisch leitfähigen Material erreicht werden.

Sowohl die elektrische Isolation zwischen den beiden elektrischen Leitern als auch die Isolation wenigstens eines der Oberflächenbereiche zur reaktiven Schicht, falls diese elektrisch leitfähig ist, werden in Anpassung an die jeweilige Anwendung gewählt. Die Isolation zwischen den beiden elektrischen Leitern kann dabei über einen Luftspalt oder auch durch Nutzung eines Isolationsmaterials zwischen den beiden elektrischen Leitern gewährleistet werden.

Mit der vorgeschlagenen Überbrückungseinrichtung lässt sich eine Energiequelle, bspw. eine Batteriezelle, oder ein elektrischer Verbraucher als zu überbrückendes Bauelement durch Auslösen der exothermen Reaktion niederohmig elektrisch überbrücken. Im ausgelösten Zustand kann dabei ein Widerstand von < 20 µΩ bei einer aktiven Fläche (Fläche unter der reaktiven Schicht) von ca. 1 cm² erreicht werden. Im nicht ausgelösten Zustand kann die Überbrückungseinrichtung einen Widerstand von > 40 MΩ aufweisen. Die vorgeschlagene Überbrückungseinrichtung ermöglicht damit auch den Durchfluss hoher Ströme, wie sie bei den eingangs genannten Anwendungen auftreten können, und lässt sich aufgrund des einfachen Aufbaus auch kostengünstig realisieren.

Der geringe elektrische Widerstand im ausgelösten Zustand kann durch Bereitstellen einer möglichst langen Grenzlinie zwischen den beiden Oberflächenbereichen, die durch das elektrisch leitfähige Schichtmaterial im ausgelösten Zustand überbrückt wird, eingestellt werden. Besonders vorteilhaft wird dies durch eine geeignete Strukturierung der elektrischen Leiter in diesem Bereich erreicht, bei der die beiden Leiter ineinander greifen. Dadurch kann bspw. bei einem fingerförmigen Ineinandergreifen eine mäanderförmige, zickzack-förmige oder auch zahnförmige Grenzlinie auf kleinem Raum erreicht werden. Auch eine Ausgestaltung, bei der die beiden elektrischen Leiter nicht in einer Richtung parallel zu den beiden Oberflächenbereichen, sondern senkrecht zu diesen Oberflächenbereichen ineinandergreifen, ist möglich. Hierzu überlappen die beiden Leiter, wobei der untere Leiter (zweiter elektrischer Leiter) eine oder mehrere Erhebungen und der obere Leiter (erster elektrischer Leiter) eine oder mehrere korrespondierende Öffnungen für das Eingreifen der Erhebungen aufweist. Die Öffnungen erstrecken sich durchgängig bis zum ersten Oberflächenbereich des oberen Leiters, wobei der oder die zweiten Oberflächenbereiche dann durch die Plateaus auf den Erhebungen des unteren Leiters gebildet werden. Eine derartige Ausgestaltung hat zudem den Vorteil einer hohen mechanischen Stabilität. Weiterhin kann in einer Variante dieser Ausgestaltung, bei welcher der oder die zweiten Oberflächenbereiche niedriger als der erste Oberflächenbereich liegen, der erste Oberflächenbereich vollständig in Kontakt mit der reaktiven Schicht sein, die dadurch auch den Spalt zwischen dem ersten und dem oder den zweiten Oberflächenbereichen vor Eindringen von unerwünschtem Material schützt.

In einer vorteilhaften Weiterbildung der vorgeschlagenen Überbrückungseinrichtung wird die reaktive Schicht über ein Andruckelement gegen den oberen der beiden Oberflächenbereiche gedrückt. Das Andruckelement kann aus einem elektrisch leitenden Material, beispielsweise einem Metall wie Kupfer oder Aluminium, oder auch aus einem elektrisch isolierenden Material, beispielsweise einem Kunststoff, bestehen. Die reaktive Schicht kann dabei lose oder auch an der Unterseite dieses Andruckelementes angebracht sein. Als Andruckelement wird ein elastisches Element, vorzugsweise ein Federelement eingesetzt, das zwischen dem Andruckelement und einer Trägerstruktur, insbesondere einem Gehäuse der Überbrückungseinrichtung, eingespannt ist. Das Gehäuse bzw. die Trägerstruktur ist dabei fest mit den beiden elektrischen Leitern verbunden.

In einer weiteren vorteilhaften Ausgestaltung ist zwischen dem Andruckelement und der reaktiven Schicht eine weitere Schicht aus dem elektrisch leitfähigem Material, insbesondere einem Lotmaterial, ausgebildet, die durch die ausgelöste exotherme Reaktion ebenfalls aufschmilzt und zur elektrischen Verbindung zwischen den beiden elektrischen Leitern beiträgt. Vorzugsweise besteht das Andruckelement in diesem Falle auch aus einem elektrisch leitendem Material, bspw. einem Metall. Das Andruckelement überdeckt dabei vorzugsweise die reaktive Schicht vollständig, um diese gleichmäßig an den ersten Oberflächenbereich anzudrücken. Durch ein elektrisch leitfähiges Andruckelement wird der elektrische Widerstand bei der Verbindung der beiden elektrischen Leiter zusätzlich erniedrigt.

Die Auslösung der exothermen Reaktion kann bspw. thermisch über einen Stromfluss durch die reaktive Schicht erfolgen. So kann die reaktive Schicht bspw. durch einen oder mehrere Kontaktpins kontaktiert werden, um eine elektrische Spannung anzulegen. Es kann auch über eine geeignete Strukturierung eine Engstelle in der reaktiven Schicht erzeugt werden, an der bei Stromfluss aufgrund des erhöhten Widerstands eine entsprechende Wärmeerzeugung erreicht wird. Die reaktive Schicht kann auch optisch, bspw. durch einen Licht- oder Laserpuls aktiviert bzw. ausgelöst werden. In einer weiteren Ausgestaltung kann ein Initialzünder eingesetzt werden, beispielsweise in Form eines reaktiven Drahtes, der in Kontakt mit oder wenigstens in der Nähe der reaktiven Schicht angeordnet ist. Ein derartiger reaktiver Draht besteht ebenfalls aus einem reaktiven Material, bspw. einer Schichtfolge aus Al und Pd, und kann bspw. thermisch durch einen Stromfluss ausgelöst werden. Derartige reaktive Drähte sind auch kommerziell erhältlich, bspw. unter der Bezeichnung Pyrofuze®. Auch eine Auslösung der reaktiven Schicht durch elektrische Funken ist möglich. Dies stellt selbstverständlich keine abschließende Aufzählung dar.

Bei der vorgeschlagenen Überbrückungseinrichtung können die beiden elektrischen Leiter bspw. auf einem DCB (Direct Copper Bond) Substrat aufgelötet sein. Ein derartiges Substrat stellt eine hohe mechanische Stabilität der Überbrückungseinrichtung sicher.

Mit der vorgeschlagenen Überbrückungseinrichtung wird eine irreversibel aktivierbare elektrische Verbindung mit geringem Widerstand bereitgestellt. Damit kann ein fehlerhaftes Bauelement in einem Strompfad überbrückt und so die Funktion des Gesamtsystems gewährleistet werden. Beispiele sind das Überbrücken von defekten Bauelementen, insbesondere Energiespeicher oder elektrische Verbraucher. Ein weiteres Beispiel besteht in der Deaktivierung von Energiespeichern, z.B. Lithiumionen-Batteriezellen, durch Auslösung des Shut-Down-Separators, mit kurzzeitigen Kurzschlussströmen im 10 kA-Bereich.

### Kurze Beschreibung der Zeichnungen

Die vorgeschlagene Überbrückungseinrichtung wird nachfolgend anhand von zwei Ausführungsbeispielen nochmals näher erläutert. Hierbei zeigen.
- Fig. 1: ein erstes Beispiel einer Überbrückungseinrichtung gemäß der vorliegenden Erfindung in einer teilweisen Explosionsdarstellung;
- Fig. 2: das Beispiel der Figur 1 in einer vollständigen Explosionsdarstellung;
- Fig. 3: ein zweites Beispiel einer Überbrückungseinrichtung gemäß der vorliegenden Erfindung in einer teilweisen Explosionsdarstellung; und
- Fig. 4: das Beispiel der Figur 3 in einer vollständigen Explosionsdarstellung.

### Wege zur Ausführung der Erfindung

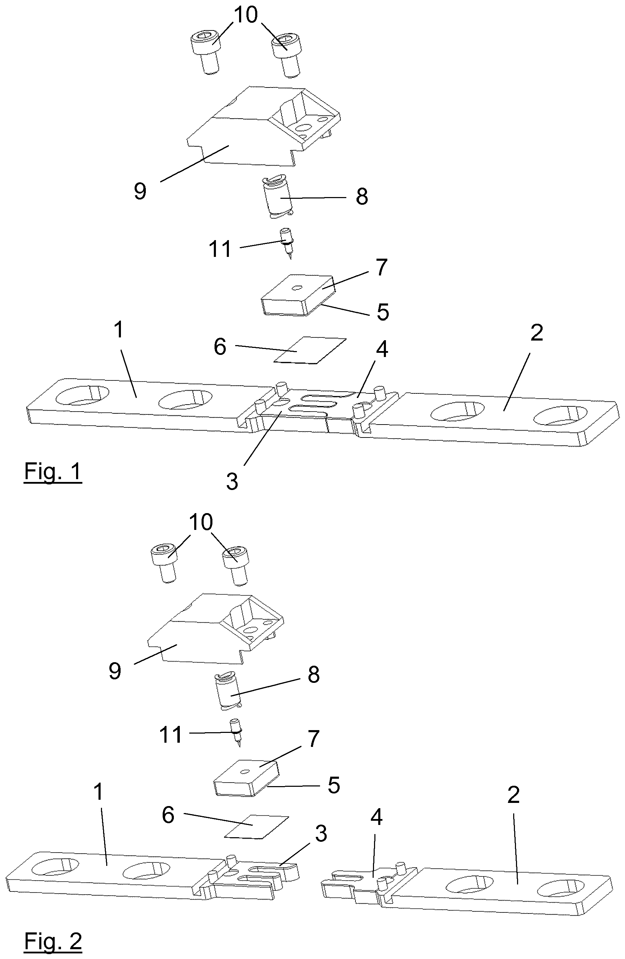

Figur 1 zeigt ein erstes Beispiel einer Ausgestaltung der vorgeschlagenen Überbrückungseinrichtung. Die Überbrückungseinrichtung besteht aus zwei gegeneinander isolierten Elektroden 1, 2. Die Elektroden sind so strukturiert, dass eine möglichst lange Grenzlinie zwischen ihren auf der Oberseite aneinander grenzenden Oberflächenbereichen entsteht. Im vorliegenden Fall wird dies durch eine ineinandergreifende Fingerstruktur der beiden Elektroden 1, 2 realisiert. Zwischen den beiden Elektroden befindet sich elektrisches Isolationsmaterial, das in der Figur nicht zu erkennen ist und als Distanzhalter fungiert. Auf den aneinander grenzenden Oberflächenbereichen der beiden Elektroden 1, 2 befindet sich jeweils eine Lotschicht 3, 4. Die Lotschicht 4 der zweiten Elektrode 2 ist dabei dünner ausgebildet als die Lotschicht 3 der ersten Elektrode 1. Dadurch wird ein Höhenunterschied erzeugt, so dass die auf die Lotschicht 3 der ersten Elektrode 1 im vorliegenden Beispiel aufgelegte reaktive Schicht 6 die Lotschicht 4 der zweiten Elektrode 2 nicht berührt. Damit wird die Isolation zwischen den beiden Elektroden 1, 2 durch den Luftspalt zwischen der reaktiven Schicht 6, bspw. in Form einer reaktiven Nanofolie, und der zweiten Lotschicht 4 aufrechterhalten. Die reaktive Schicht 6 wird durch ein Andruckelement 7, das im vorliegenden Beispiel an der Unterseite mit einer weiteren Lotschicht 5 beschichtet ist, auf die erste Lotschicht 3 der ersten Elektrode 1 gedrückt. Den notwendigen Druck liefert ein Federelement 8, das im Gehäuse 9 der Überbrückungseinrichtung zwischen dem Andruckelement 7 und dem Gehäuse 9 eingespannt ist. Das Gehäuse 9 wird im vorliegenden Beispiel mit den Schrauben 10 auf die beiden Elektroden 1, 2 aufgeschraubt und besteht aus einem elektrisch isolierenden Material.

Bei Aktivierung der Überbrückungseinrichtung werden die Lotschichten 3, 4, 5 durch die Wärme aus der exotherm reagierenden reaktiven Schicht 6 aufgeschmolzen und dadurch miteinander verbunden. Dies stellt dann die elektrische Verbindung zwischen den beiden Elektroden 1,2 her. Im vorliegenden Beispiel erfolgt die Auslösung der exothermen Reaktion der reaktiven Schicht 6 über einen Stromfluss in der reaktiven Schicht 6. Hierzu wird die reaktive Schicht über ein Kontaktpin 11 elektrisch kontaktiert, das durch eine Öffnung in dem Andruckelement 7 an die reaktive Schicht 6 heranreicht. Da die reaktive Schicht 6 in Kontakt mit der ersten Lotschicht 3 und somit der ersten Elektrode 1 ist, kann über Kontaktpin 11 und erste Elektrode 1 eine elektrische Spannung an die reaktive Schicht 6 angelegt werden, um den für die Auslösung der exothermen Reaktion erforderlichen Stromfluss durch die reaktive Schicht 6 zu erzeugen.

Figur 2 zeigt diese beispielhafte Überbrückungseinrichtung nochmals in vollständiger Explosionsdarstellung, bei der auch die beiden Elektroden 1, 2 getrennt dargestellt sind.

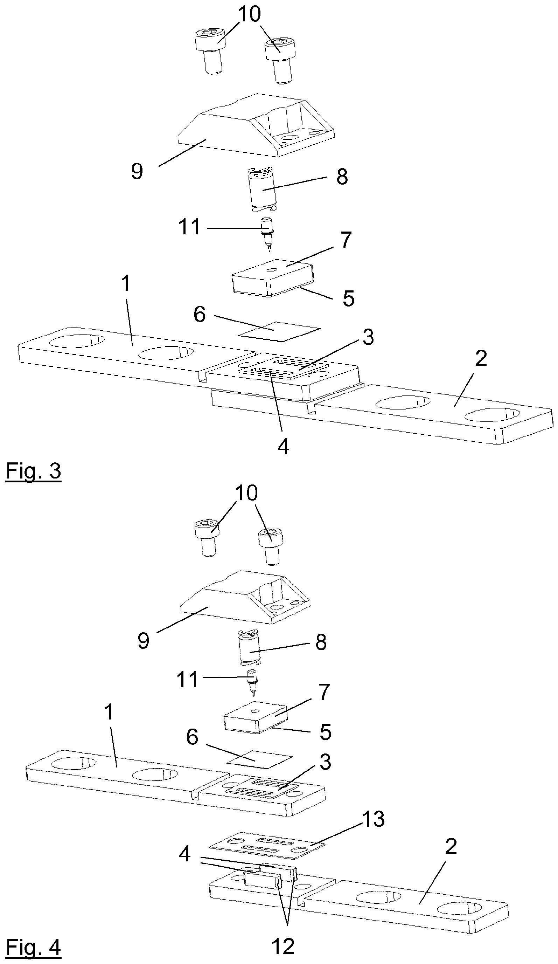

Figur 3 zeigt ein weiteres Beispiel für die vorgeschlagene Überbrückungseinrichtung. Bei diesem Beispiel werden die gleichen Bezugszeichen für die gleichen Elemente der Überbrückungseinrichtung verwendet wie in den Figuren 1 und 2. Diese Ausgestaltung unterscheidet sich in der Ausbildung der beiden Elektroden 1, 2 und der aneinandergrenzenden Oberflächenbereiche dieser Elektroden. Die beiden Elektroden 1, 2 sind in diesem Beispiel so ausgebildet, dass sie sich teilweise überdecken. In dem Überdeckungsbereich weist die untere der beiden Elektroden zwei Stege 12 auf, die in durchgängige Öffnungen der oberen der beiden Elektroden eingreifen. Im zusammengesetzten Zustand liegen die oberen Plateaus dieser beiden Stege 12 niedriger als die Oberfläche der oberen Elektrode, wie dies in Figur 3 zu erkennen ist. Diese aneinandergrenzenden Oberflächenbereiche tragen entsprechend die beiden Lotschichten 3 und 4 und werden von der reaktiven Schicht 6 überdeckt. Da die Plateaus der Stege 12 niedriger liegen als die Oberfläche der oberen Elektrode, entsteht auch hier wieder ein elektrisch isolierender Spalt zu der reaktiven Schicht 6. Die reaktive Schicht 6 wird auch in diesem Beispiel über das Andruckelement 7 gegen die obere Lotschicht 3 gedrückt. Dies erfolgt in gleicher Weise und mit den gleichen Komponenten wie auch bei den Figuren 1 und 2. Die Isolation der beiden Elektroden 1, 2 erfolgt auf der einen Seite über eine elektrisch isolierende Schicht 13, die in der vollständigen Explosionsdarstellung der Figur 4 zu erkennen ist. Innerhalb der Öffnungen erfolgt die Isolation zwischen den Stegen 12 der unteren Elektrode 2 und den Wandbereichen der Öffnungen der oberen Elektrode 1 über einen entsprechenden Luftspalt oder auch ein Isolationsmaterial. Die beiden Schrauben 10 für die Befestigung des Gehäuses 9 müssen in diesem Beispiel elektrisch isoliert sein oder aus einem elektrisch isolierenden Material bestehen.

Die Aktivierung der reaktiven Schicht 6 und die daraus resultierende elektrische Verbindung zwischen den beiden Elektroden 1, 2 erfolgt in gleicher Weise wie auch bereits in Verbindung mit Figur 1 erläutert.

### Bezugszeichenliste

- 1: erste Elektrode
- 2: zweite Elektrode
- 3: erste Lotschicht
- 4: zweite Lotschicht
- 5: Lotschicht an Unterseite des Andruckelements
- 6: reaktive Schicht
- 7: Andruckelement
- 8: Federelement
- 9: Gehäuse
- 10: Verbindungsschrauben
- 11: Kontaktpin
- 12: Stege
- 13: Isolationsschicht

## Patentansprüche

1. Elektrische Überbrückungseinrichtung, die
- wenigstens einen ersten (1) und einen zweiten elektrischen Leiter (2) aufweist, die elektrisch voneinander isoliert und so angeordnet sind, dass wenigstens ein erster in eine Raumrichtung orientierter Oberflächenbereich des ersten Leiters (1) über einen Spalt von wenigstens einem zweiten in die gleiche Raumrichtung orientierten Oberflächenbereich des zweiten Leiters (2) beabstandet ist, wobei der erste und der zweite Oberflächenbereich aus dieser Raumrichtung jeweils als Flächenbereich erkennbar sind,
- der erste und der zweite Oberflächenbereich jeweils mit einer Schicht (3, 4) aus einem elektrisch leitfähigen Material bedeckt ist, das einen niedrigeren Schmelzpunkt als die elektrischen Leiter (1, 2) aufweist, und
- über den beiden Schichten (3, 4) aus dem elektrisch leitfähigen Material eine reaktive Schicht (6) angeordnet ist, in der sich eine exotherme Reaktion auslösen lässt,
- wobei der Spalt zwischen den beiden Oberflächenbereichen so gewählt und die reaktive Schicht (6) so dimensioniert und angeordnet ist, dass die beiden Schichten (3, 4) aus dem elektrisch leitfähigen Material durch die bei der exothermen Reaktion der reaktiven Schicht (6) abgegebene Wärmeenergie an dem Spalt verschmelzen und dadurch eine elektrische Verbindung zwischen den elektrischen Leitern (1, 2) hergestellt wird.

2. Überbrückungseinrichtung nach Anspruch 1,
**dadurch gekennzeichnet,**
**dass** der erste Oberflächenbereich in der Höhe versetzt zum zweiten Oberflächenbereich angeordnet ist.

3. Überbrückungseinrichtung nach Anspruch 1,
**dadurch gekennzeichnet,**
**dass** die beiden Schichten (3, 4) aus dem elektrisch leitfähigen Material unterschiedliche Dicken aufweisen.

4. Überbrückungseinrichtung nach Anspruch 2,
**dadurch gekennzeichnet,**
**dass** die reaktive Schicht (6) auf einer der Schichten (3, 4) aus dem elektrisch leitfähigen Material aufliegt, die auf dem höheren der beiden Oberflächenbereiche ausgebildet ist, und zur anderen Schicht (3, 4) einen Abstand aufweist.

5. Überbrückungseinrichtung nach Anspruch 3,
**dadurch gekennzeichnet,**
**dass** die reaktive Schicht (6) auf der dickeren der beiden Schichten (3, 4) aus dem elektrisch leitfähigen Material aufliegt und zur anderen Schicht (3, 4) einen Abstand aufweist.

6. Überbrückungseinrichtung nach Anspruch 4 oder 5,
**dadurch gekennzeichnet,**
**dass** über der reaktiven Schicht (6) ein Andruckelement (7) angeordnet ist, durch das die reaktive Schicht (6) mittels eines elastischen Elements (8), insbesondere eines Federelements, gegen die jeweilige Schicht (3, 4) aus dem elektrisch leitfähigen Material gedrückt wird.

7. Überbrückungseinrichtung nach Anspruch 6,
**dadurch gekennzeichnet,**
**dass** zwischen dem Andruckelement (7) und der reaktiven Schicht (6) eine weitere Schicht (5) aus dem elektrisch leitfähigen Material angeordnet ist.

8. Überbrückungseinrichtung nach Anspruch 7,
**dadurch gekennzeichnet,**
**dass** das Andruckelement (7) aus einem elektrisch leitenden Material besteht.

9. Überbrückungseinrichtung nach einem der Ansprüche 6 bis 8,
**dadurch gekennzeichnet,**
**dass** eine Abdeckung (9) über der reaktiven Schicht (6) mit dem Andruckelement (7) angeordnet und fest mit dem ersten und zweiten elektrischen Leiter (1, 2) verbunden ist, wobei das elastische Element (8) zwischen der Abdeckung (9) und dem Andruckelement (7) eingespannt ist.

10. Überbrückungseinrichtung nach einem der Ansprüche 6 bis 9,
**dadurch gekennzeichnet,**
**dass** das Andruckelement (7) die reaktive Schicht (6) vollständig überdeckt.

11. Überbrückungseinrichtung nach einem der Ansprüche 1 bis 10,
**dadurch gekennzeichnet,**
**dass** das elektrisch leitfähige Material ein Lot ist.

12. Überbrückungseinrichtung nach einem der Ansprüche 1 bis 11,
**dadurch gekennzeichnet,**
**dass** der erste und zweite elektrische Leiter (1, 2) im Bereich des ersten und zweiten Oberflächenbereiches ineinander greifen.

13. Überbrückungseinrichtung nach Anspruch 12,
**dadurch gekennzeichnet,**
**dass** der erste und zweite elektrische Leiter (1, 2) im Bereich des ersten und zweiten Oberflächenbereiches in einer Richtung parallel zu dem ersten und zweiten Oberflächenbereich fingerförmig ineinander greifen.

14. Überbrückungseinrichtung nach Anspruch 12,
**dadurch gekennzeichnet,**
**dass** der erste und zweite elektrische Leiter (1, 2) im Bereich des ersten und zweiten Oberflächenbereiches in einer Richtung senkrecht zum ersten und zweiten Oberflächenbereich ineinander greifen.

15. Überbrückungseinrichtung nach Anspruch 14,
**dadurch gekennzeichnet,**
**dass** der erste elektrische Leiter (1) im ersten Oberflächenbereich wenigstens eine durchgängige Öffnung aufweist, in die ein erhabener Bereich (12) des zweiten elektrischen Leiters (2) von einer dem ersten Oberflächenbereich gegenüberliegenden Seite des ersten elektrischen Leiters (1) eingreift, wobei der erhabene Bereich (12) ein Plateau aufweist, das dem zweiten Oberflächenbereich entspricht.

16. Überbrückungseinrichtung nach einem der Ansprüche 1 bis 15,
**dadurch gekennzeichnet,**
**dass** zusätzlich zum ersten und zweiten elektrischen Leiter (1, 2) ein oder mehrere weitere elektrische Leiter in gleicher Weise angeordnet und mit einer Schicht (3, 4) aus einem elektrisch leitfähigen Material bedeckt sind, so dass durch die bei der exothermen Reaktion der reaktiven Schicht (6) abgegebene Wärmeenergie auch eine elektrische Verbindung zu dem einen oder den mehreren weiteren elektrischen Leitern (1, 2) hergestellt wird.

## Claims

1. Electrical bridging device, having
- at least one first (1) and one second electrical conductor (2) which are electrically isolated from each other and arranged such that at least one first surface region of the first conductor (1) orientated in a spatial direction is separated by a gap from at least one second surface region of the second conductor (2) orientated in the same spatial direction,
wherein the first and the second surface regions are each identifiable as a surface region from this spatial direction,
- the first and second surface regions are each covered with a layer (3, 4) consisting of an electrically conductive material, which has a lower melting point than the electrical conductors (1, 2), and
- a reactive layer (6) in which an exothermic reaction can be triggered is arranged above the two layers (3, 4) of electrically conductive material,
- wherein the gap between the two surface regions is selected and the reactive layer (6) is dimensioned and arranged in such manner that the two layers (3, 4) composed of the electrically conductive material fuse at the gap due to the thermal energy emitted during the exothermic reaction of reactive layer (6), and as a result an electrical connection is established between the electrical conductors (1, 2).

2. Bridging device according to Claim 1,
**characterized in that**
the first surface region is arranged with a height offset relative to the second surface region.

3. Bridging device according to Claim 1,
**characterized in that**
the two layers (3, 4) composed of the electrically conductive material are of different thicknesses.

4. Bridging device according to Claim 2,
**characterized in that**
the reactive layer (6) lies on one of the layers (3, 4) composed of the electrically conductive material, which is formed on the uppermost of the two surface regions and is located at a distance from the other layer (3, 4).

5. Bridging device according to Claim 3,
**characterized in that**
the reactive layer (6) lies on the thicker of the two layers (3, 4) composed of the electrically conductive material and is located at a distance from the other layer (3, 4).

6. Bridging device according to Claim 4 or 5,
**characterized in that**
a pressure element (7) is arranged above the reactive layer (6), via which the reactive layer (6) is pressed against the respective layer (3, 4) composed of the electrically conductive material by means of a resilient element (8), particularly a spring element.

7. Bridging device according to Claim 6,
**characterized in that**
a further layer (5) of the electrically conductive material is arranged between the pressure element (7) and the reactive layer (6).

8. Bridging device according to Claim 7,
**characterized in that**
the pressure element (7) consists of an electrically conductive material.

9. Bridging device according to any one of Claims 6 to 8,
**characterized in that**
a cover (9) is arranged above the reactive layer (6) with the pressure element (7) and is connected permanently with the first and second electrical conductors (1, 2), wherein the resilient element (8) is tensioned between the cover (9) and the pressure element (7).

10. Bridging device according to any one of Claims 6 to 9,
**characterized in that**
the pressure element (7) covers the reactive layer (6) completely.

11. Bridging device according to any one of Claims 1 to 10,
**characterized in that**
the electrically conductive material is a solder.

12. Bridging device according to any one of Claims 1 to 11,
**characterized in that**
the first and second electrical conductors (1, 2) engage with each other in the area of the first and second surface regions.

13. Bridging device according to Claim 12,
**characterized in that**
the first and second electrical conductors (1, 2) engage with each other with a finger-like structure in a direction parallel to the first and second surface regions in the area of the first and second surface regions.

14. Bridging device according to Claim 12,
**characterized in that**
the first and second electrical conductors (1, 2) engage with each other in a direction perpendicular to the first and second surface regions in the area of the first and second surface regions.

15. Bridging device according to Claim 14,
**characterized in that**
the first electrical conductor (1) has a least one continuous opening in the first surface region, in which opening a raised area (12) of the second electrical conductor (2) engages from a side of the first electrical conductor (1) opposite the first surface region, wherein the raised area (12) has a plateau which corresponds to the second surface region.

16. Bridging device according to any one of Claims 1 to 15,
**characterized in that**
besides the first and second electrical conductors (1, 2) one or more further electrical conductors are arranged and covered with a layer (3, 4) composed of an electrically conductive material in the same manner, so that an electrical connection with the one or more further electrical conductors (1, 2) is also established by the thermal energy emitted during the exothermic reaction of the reactive layer (6).

## Revendications

1. Dispositif de pontage électrique, qui comprend
- au moins un premier (1) et un deuxième conducteur électrique (2), qui sont isolés les uns des autres et disposés de telle sorte qu'au moins une première surface du premier conducteur (1) orientée dans une direction spatiale soit espacée via un interstice d'au moins une seconde surface du second conducteur (2) orientée dans la même direction spatiale, dans lequel la première et la seconde surface sont reconnaissables chacune comme une surface à partir de cette direction spatiale,
- dans lequel la première et la seconde surface sont chacune recouvertes d'une couche (3, 4) d'un matériau électriquement conducteur qui a un point de fusion inférieur à celui du conducteur électrique (1, 2), et
- sur les deux couches (3, 4) de la matière électriquement conductrice, une couche réactive (6) est disposée dans laquelle une réaction exothermique peut être déclenchée,
- dans lequel l'interstice entre les deux surfaces est ainsi choisi et la couche réactive (6) est dimensionnée et disposée de telle sorte que les deux couches (3, 4) constituées d'un matériau électriquement conducteur soient fondues sur l'interstice par l'énergie thermique libérée par la couche réactive (6) lors de la réaction exothermique et qu'ainsi une connexion électrique soit établie entre les conducteurs électriques (1, 2).

2. Dispositif de pontage selon la revendication 1,
**caractérisé en ce que**
la première surface est disposée en décalage en hauteur par rapport à la seconde surface.

3. Dispositif de pontage selon la revendication 1,
**caractérisé en ce que**
les deux couches (3, 4) du réseau électrique constituées du matériau conducteur ont des épaisseurs différentes.

4. Dispositif de pontage selon la revendication 2,
**caractérisé en ce que**
la couche réactive (6) vient reposer sur une des couches (3, 4) du matériau électriquement conducteur, qui est formée sur la plus haute des deux surfaces et présente un interstice par rapport à l'autre couche (3, 4).

5. Dispositif de pontage selon la revendication 3,
**caractérisé en ce que**
la couche réactive (6) sur la plus épaisse des deux couches (3, 4) vient reposer sur le matériau conducteur d'électricité et présente un interstice par rapport à l'autre couche (3, 4).

6. Dispositif de pontage selon la revendication 4 ou 5,
**caractérisé en ce que**
sur la couche réactive (6) un élément de pression (7) est disposé, par l'intermédiaire duquel la couche réactive (6) est pressée au moyen d'un élément élastique (8), en particulier un élément élastique contre la couche respective (3, 4) constituée d'un matériau électriquement conducteur.

7. Dispositif de pontage selon la revendication 6,
**caractérisé en ce qu'**
une autre couche (5) constituée d'un matériau électriquement conducteur est disposée entre l'élément de pression (7) et la couche réactive (6).

8. Dispositif de pontage selon la revendication 7,
**caractérisé en ce que**
l'élément de pression (7) est constitué d'un matériau électriquement conducteur.

9. Dispositif de pontage selon une des revendications 6 à 8,
**caractérisé en ce qu'**
un capot (9) est disposé sur la couche réactive (6) avec l'élément de pression (7) disposé et relié solidement au premier et deuxième conducteur électrique (1, 2), dans lequel l'élément élastique (8) est encastré entre le couvercle (9) et l'élément de pression (7).

10. Dispositif de pontage selon une des revendications 6 à 9,
**caractérisé en ce que**
l'élément de pression (7) recouvre entièrement la couche réactive (6).

11. Dispositif de pontage selon une des revendications 1 à 10,
**caractérisé en ce que**
le matériau électriquement conducteur est une soudure.

12. Dispositif de pontage selon une des revendications 1 à 11,
**caractérisé en ce que**
le premier et le deuxième conducteur électrique (1, s'emboîtent dans la zone de la première et la deuxième zone de surface.

13. Dispositif de pontage selon la revendication 12,
**caractérisé en ce que**
le premier et le deuxième conducteur électrique (1, 2) dans la zone de la première et la deuxième surface s'entremêlent en forme de doigt dans une direction parallèle à la première et deuxième zone de surface.

14. Dispositif de pontage selon la revendication 12,
**caractérisé en ce que**
le premier et le deuxième conducteur électrique (1, 2) s'emboîtent dans la zone de la première et la deuxième zone de surface dans une direction perpendiculaire à la première et deuxième zone de surface.

15. Dispositif de pontage selon la revendication 14,
**caractérisé en ce que**
le premier conducteur électrique (1) dans la première surface présente au moins une ouverture continue, dans laquelle une zone surélevée (12) du deuxième conducteur électrique (2) vient en prise d'un côté du premier conducteur électrique (1) opposé à la première surface, dans lequel la zone surélevée (12) présente un plateau qui correspond à la seconde surface.

16. Dispositif de pontage selon une des revendications 1 à 15,
**caractérisé en ce qu'**
en plus du premier et du deuxième conducteur électrique (1, 2) un ou plusieurs autres conducteurs électriques conducteurs sont disposés de la même manière et sont recouverts d'une couche (3, 4) constituée d'un matériau électriquement conducteur, de sorte qu'en raison de l'énergie thermique dégagée lors de la réaction exothermique de la couche réactive (6) également une connexion électrique au ou aux autres conducteurs électriques (1, 2) soit établie.
